# FASCICULE DE BREVET EUROPEEN

(11) **EP 0 614 259 B1**
(45) Date de publication et mention de la délivrance du brevet: **29.07.1998**
(21) Numéro de dépôt: 94400457.1
(22) Date de dépôt: 03.03.1994
(51) Int. Cl.: H02H 3/33, H02H 3/20

(54) **Interrupteur différentiel de protection contre les courants de défaut et les surtensions**
Differenzstromschalter zum Schutz gegen Fehlerströme und Überspannungen
Differential circuit breaker for protection against fault currents and overvoltages

(30) Priorité: 05.03.1993 FR 9302574
(43) Date de publication de la demande: 07.09.1994
(73) Titulaire: SERD Société d'Etude et de Réalisation de Disjoncteurs, 67100 Strasbourg (FR)
(72) Inventeur: Hugel, Philippe, F-67640 Fegersheim (FR)
(74) Mandataire: CABINET BONNET-THIRION

(56) Documents cités:
- EP-A- 0 295 415
- FR-A- 1 327 912
- FR-A- 2 470 466
- US-A- 4 068 276

## Description

L'invention concerne d'une manière générale les interrupteurs différentiels du genre comportant un transformateur de courant totalisateur et un circuit de déclenchement et dans lesquels un premier interrupteur électronique, actionné par le courant de défaut apparaissant dans le transformateur de courant totalisateur, commande, lors de sa commutation, un déclencheur qui coupe au moins une phase du réseau.

Avec un tel interrupteur différentiel on évite que, grâce à la coupure d'au moins une phase du réseau, de l'énergie électrique continuant à circuler à partir du réseau provoque des dommages à des personnes ou à des installations électriques. Les interrupteurs différentiels sont en règle générale très fiables mais dans une large mesure indépendants des fluctuations du réseau, étant donné que le transformateur de courant totalisateur d'entrée ne saisit que des différences d'intensité des courants circulant dans les conducteurs électriques qu'il entoure. L'apparition de surtensions peut toutefois provoquer également des dommages aux installations électriques et par suite dans certaines conditions des dommages aux personnes. De même, un comportement défectueux d'installations électroniques dû à une surtension et ayant passé inaperçu d'abord, comme par exemple une commutation erronée de signaux logiques dans des circuits digitaux, peut par la suite avoir des conséquences très fâcheuses. Toutefois il est vrai que des alimentations de courant exemptes d'interruptions sont largement en usage dans des installations sensibles, or celles-ci ne protègent pas en général contre les surtensions. A cet effet il faut installer spécialement des circuits de protection complémentaires contre les surtensions, ce qui nécessite des câblages supplémentaires et de la place pour les loger.

Plus particulièrement, l'invention concerne les interrupteurs différentiels sélectifs, c'est-à-dire les interrupteurs différentiels dans lesquels il est prévu un accumulateur d'énergie qui constitue un organe de temporisation qui engendre une temporisation de déclenchement, bien définie par une courbe déterminée, pour que seuls soient en pratique pris en compte les défauts de durée relativement longue et déterminée, de l'ordre par exemple de plusieurs minutes.

Plus particulièrement, encore, l'invention concerne les interrupteurs différentiels à courant propre, en l'espèce le courant de défaut, c'est-à-dire les interrupteurs différentiels dans lesquels l'alimentation de l'enroulement constituant le déclencheur se fait par le courant de défaut détecté.

Elle propose d'une manière générale une disposition permettant avantageusement d'adjoindre de manière très simple à la fonction de déclenchement sur courant de défaut de ces interrupteurs différentiels une fonction de déclenchement sur une surtension.

Dans le document US-A-4 068 276, un circuit de saisie d'une surtension est à cet effet raccordé au circuit de déclenchement.

Mais, dans ce document, l'alimentation se fait systématiquement par la ligne contrôlée, à la manière d'une source auxiliaire.

L'alimentation étant ainsi dérivée de la ligne, il devient impératif de prévoir des fonctions supplémentaires, et, plus précisément, des fonctions de contrôle de coupure de neutre et de contrôle de sous-voltage, ce qui conduit inévitablement à une certaine complication pour l'ensemble.

Le relais constituant le déclencheur n'étant pas un relais à ouverture par manque de tension, mais, au contraire, un relais dont les contacts sont fermés au repos, il serait d'ailleurs impossible de le faire fonctionner à propre courant, le courant utilisable à cet effet étant trop faible.

Il ne s'agit pas non plus, dans le document US-A-4 068 276, d'un interrupteur différentiel "sélectif".

De ce point de vue, la capacité qui y est prévue ne constitue pas une telle temporisation, mais un simple filtre destiné à écarter les parasites.

Enfin, pour la détection de la surtension, il n'est pas mis en oeuvre, dans ce document, un montage de résistances, mais une résistance unique, en série avec une diode Zener.

Il faut donc disposer d'une diode Zener capable de résister à une tension relativement élevée, qui, en pratique, n'est que très peu inférieure à celle de la ligne.

Si cela est envisageable pour une tension de ligne relativement faible, de l'ordre par exemple de 110 V, il n'en est pas de même, du point de vue économique, avec une tension de ligne plus élevée, de l'ordre par exemple de 220 V.

Dans le document FR-A-2 470 466 il est envisagé une protection à l'égard de surtensions brèves, dont est au contraire affranchi l'interrupteur différentiel objet de la présente invention.

Le condensateur mis en oeuvre dans ce document ne constitue pas non plus un accumulateur d'énergie, puisque, en l'absence de tout organe de commutation en série avec lui et l'enroulement du relais formant déclencheur, il ne se décharge jamais complètement à travers cet enroulement.

Enfin, dans ce document FR-A-2 470 466, l'interrupteur différentiel, d'une part, et les éléments disruptifs mis en oeuvre, d'autre part, relèvent d'appareils distincts et n'interviennent donc pas sous un même boîtier, au prix d'un encombrement supplémentaire pour l'ensemble.

Le document EP-A-0 295 415 concerne le cas très particulier d'une alimentation à stockage d'énergie pour lequel est recherchée une coupure rapide pour éviter que l'énergie stockée ne prolonge indûment les éventuels courants de défaut, ce qui exclu toute mise en oeuvre d'une quelconque temporisation.

Le document FR-A-1 327 912, enfin, ne concerne, lui, qu'un détecteur de surtension, dans lequel, de surcroît, il est procédé à une transformation de la surtension en impulsions dont la fréquence dépend de la valeur de cette surtension.

Les condensateurs prévus interviennent au sein d'intégrateurs, sans qu'ils puissent être assimilés à la temporisation dûment contrôlée d'un interrupteur différentiel sélectif.

L'invention a pour objet un interrupteur différentiel de sécurité renforcée, d'un coût favorable, simple à installer et n'exigeant pas de place additionnelle.

Cet interrupteur différentiel est du genre comportant un transformateur de courant totalisateur et un circuit de déclenchement, avec, d'une part, un premier interrupteur électronique, qui, actionné par le courant de défaut apparaissant dans le transformateur de courant totalisateur, commande, lors de sa commutation, un déclencheur qui coupe au moins une phase du réseau, et, d'autre part, un circuit de saisie d'une surtension raccordé au circuit de déclenchement de telle façon que ce circuit actionne en cas d'apparition d'une surtension le premier interrupteur électronique, et, par conséquent, le déclencheur, et il est d'une manière générale caractérisé en ce que, un organe de temporisation engendrant une temporisation de déclenchement étant prévu, et s'agissant ainsi d'un interrupteur sélectif, qui est à courant propre, le circuit de saisie d'une surtension est branché sur ledit organe de temporisation pour fournir l'énergie d'alimentation nécessaire au déclencheur, et en ce que cet organe de temporation est un accumulateur d'énergie.

Ainsi, le circuit de saisie d'une surtension profite avantageusement de la temporisation de déclenchement prévue pour le transformateur de courant totalisateur, lorsque, s'agissant, comme en l'espèce, d'un interrupteur différentiel sélectif, se trouve présent un organe de temporisation.

L'invention est en effet fondée sur l'observation, non relevée auparavant, que la temporisation de déclenchement présente dans un interrupteur différentiel sélectif va avantageusement dans le bon sens pour un circuit de saisie de surtension, puisque la coupure recherchée dans ce cas interviendra d'autant plus vite que la surtension correspondante est elle-même plus forte.

En outre, les pointes de surtension transitoires sont avantageusement filtrées, moyennant une faible puissance effective, sans aboutir à des coupures indésirables du réseau.

L'invention permet ainsi globalement d'adjoindre avantageusement économiquement à une fonction existante, à savoir celle assurée par le transformateur de courant totalisateur, une fonction supplémentaire, à savoir celle assurée par le circuit de saisie d'une surtension, et, donc, d'étendre très simplement en correspondance le champ d'action des interrupteurs différentiels sélectifs.

De cette façon, il est proposé un interrupteur différentiel sélectif à courant propre qui réagit aussi bien en cas de courant de défaut qu'en cas de surtension, par coupure d'au moins une phase du réseau. L'intégration des composants électroniques dans un boîtier unique réduit l'encombrement et supprime les frais d'installation additionnelle.

Grâce à un montage qui permet de régler la valeur de surtension qui déclenche l'interrupteur électronique, le système peut s'adapter à des conditions d'application quelconques. Dans le cas d'appareils électriques domestiques, une valeur de surtension de 300 V efficaces s'est avérée valable. Mais cette valeur peut être ajustée, en cas de montages électroniques plus sensibles, à des niveaux plus proches de la tension nominale, et également en cas d'appareils électriques moins sensibles comme par exemple des moteurs ou appareils de chauffage, à des niveaux plus élevés par rapport à la tension nominale. Grâce à un deuxième interrupteur électronique dans le système, servant à la saisie d'une surtension, le seuil de déclenchement fonction de la tension peut être déterminé plus exactement, et la sécurité de la commutation se trouve améliorée. En tant que composants économiques et fiables, des transistors programmables Unijunction et des thyristors se sont révélés valables.

Avec un montage à deux étages résistifs, dont le premier étage diviseur de tension fournit en cas de surtension essentiellement l'énergie électrique d'alimentation du premier et du deuxième interrupteur électronique ainsi que du déclencheur, et dont le deuxième étage diviseur de tension engendre essentiellement la tension appliquée à l'entrée de commande du deuxième interrupteur électronique, il est possible d'assurer un déclenchement fiable avec un faible prélèvement de puissance, même s'il s'agit d'un interrupteur différentiel sélectif à courant propre, c'est-à-dire sans alimentation en courant externe.

L'invention va être décrite en détail dans ce qui suit, avec référence aux dessins annexés, qui représentent :
la figure 1 est un schéma-bloc des connexions de l'interrupteur différentiel suivant l'invention ;
la figure 2 est un plan de montage électrique de cet interrupteur différentiel ;
la figure 3 représente sa temporisation de déclenchement en fonction de la surtension.

L'interrupteur différentiel suivant l'invention consiste essentiellement en un interrupteur différentiel sélectif à courant propre 1 de construction usuelle, de préférence en un interrupteur différentiel sélectif à courant propre à caractéristique de déclenchement fonction de l'intensité du courant, et en un circuit 2 de saisie d'une surtension. L'interrupteur différentiel sélectif à courant propre 1 est logé avec le circuit 2 dans un boîtier commun 3.

Le transformateur de courant totalisateur 4 de l'interrupteur différentiel sélectif à courant propre 1 entoure par son enroulement primaire des tronçons de conducteurs 5, 6, parcourus par les tensions et intensités concernant les circuits d'alimentation 10 des appareils utilisateurs à surveiller. L'enroulement secondaire du transformateur de courant totalisateur 4 est raccordé à un circuit de déclenchement 7, qui actionne un déclencheur 8.

Dans l'exemple d'exécution présenté, le déclencheur 8 consiste en un relais bistable dont les contacts 9 provoquent en cas de coupure du réseau, un découplage galvanique intégral du circuit d'alimentation 10 du côté des appareils utilisateurs, par rapport au réseau de distribution public 11. Le relais est logé dans le présent exemple d'exécution avec sa bobine et ses contacts 9 en un boîtier commun ; toutefois ce relais peut également être prévu sous forme de relais à palette mobile dont les contacts sont éloignés de la bobine et ont une liaison mécanique avec la palette mobile. Le déclencheur 8 peut consister aussi en un interrupteur statique tel que par exemple un thyristor, un triac, un diac ou un transistor.

L'enroulement secondaire du transformateur de courant totalisateur 4 est relié à l'enroulement 13 du relais du déclencheur 8 par l'intermédiaire d'un redresseur 12 en amont du courant et à travers le premier interrupteur électronique 14 en aval du courant.

L'interrupteur électronique 14 consiste en un thyristor 15, dont la voie anode-gate est pontée par une diode Zener 16 montée en inverse. L'interrupteur électronique 14 peut également consister en composants électroniques quelconques qui en cas de dépassement d'un seuil de tension passent à un état conducteur, lequel provoque l'actionnement du déclencheur 8.

L'interrupteur différentiel 1 étant un interrupteur différentiel sélectif, un organe de temporisation 17 est prévu.

Dans la forme de réalisation représentée, il s'agit d'un accumulateur d'énergie électrique formé par un condensateur branché en parallèle sur le circuit comprenant en série l'enroulement 13 du relais formant le déclencheur 8 et l'interrupteur électronique 14. L'accumulateur d'énergie électrique que constitue ainsi l'organe de temporisation 17 engendre de façon connue en soi la temporisation de déclenchement en fonction du courant de défaut.

Le circuit 2 de saisie d'une surtension est branché à la sortie en parallèle sur l'organe de temporisation 17, pour fournir l'énergie d'alimentation nécessaire au déclencheur 8.

A l'entrée, le circuit 2 est raccordé à travers un premier étage diviseur de tension formé par les résistances 18, 19, avec les conducteurs 5, 6. La sortie du premier étage diviseur de tension est raccordée dans un premier exemple d'exécution à l'entrée d'un deuxième interrupteur électronique 20, dont la sortie est branchée à travers un redresseur 21 aussi bien au redresseur 12 qu'à l'enroulement 13 du relais formant le déclencheur 8.

D'autre part, la sortie du premier étage diviseur de tension est raccordée au conducteur 5 par l'intermédiaire d'un deuxième étage diviseur de tension comprenant une résistance 22 et un potentiomètre 23. Le potentiomètre 23 est raccordé par sa prise de résistance variable à la sortie du deuxième étage diviseur de tension, à laquelle est branchée l'entrée de commande du deuxième interrupteur électronique 20.

A l'aide du potentiomètre 23 il est possible de régler la tension de commutation appliquée sur le deuxième interrupteur électronique 20 à travers la résistance 22, et de cette façon, il est possible de régler la surtension qui doit provoquer la coupure, et, donc, le seuil de déclenchement de l'interrupteur électronique 14.

La résistance de sortie du premier étage diviseur de tension a une valeur telle que lorsque le deuxième interrupteur 20 est à l'état conducteur, suffisamment de puissance électrique est mise à disposition pour la commutation du premier interrupteur électronique 14 et du déclencheur 8. Une tension de sortie de 10 V aux bornes de sortie du premier étage diviseur de tension s'est avérée suffisante.

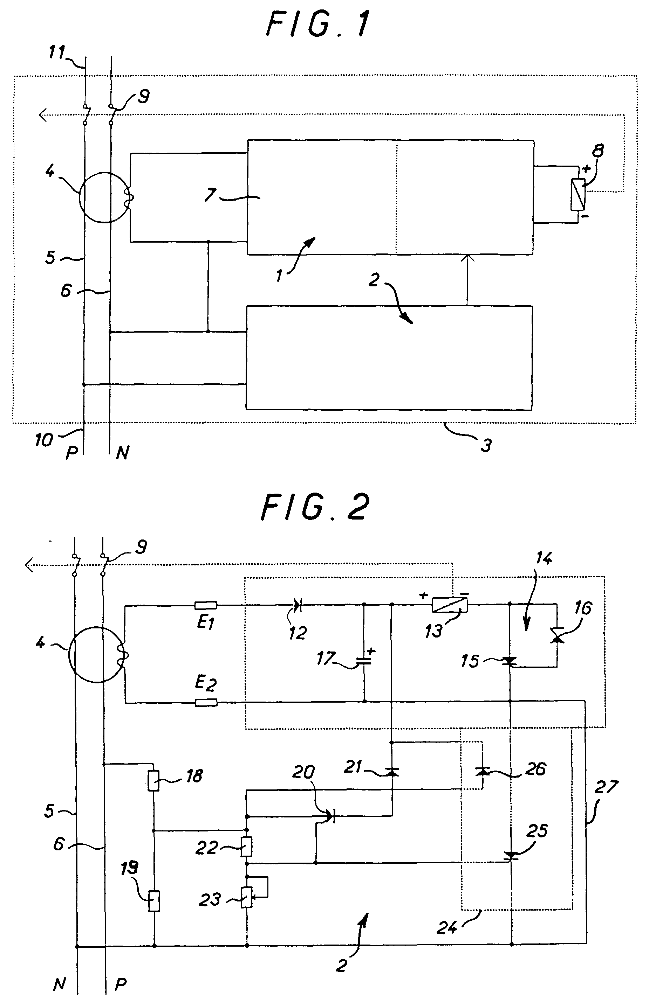

Dans le premier exemple d'exécution, le deuxième interrupteur électronique 20 consiste en un transistor programmable Unijunction PUT. Un conducteur 27 relie la prise inférieure de l'organe de temporisation 17 au conducteur 5. Dans ces conditions, les composants 25, 26 du circuit 2, figurant sur la figure 2 dans un rectangle en pointillés, ne sont pas présents.

Dans un deuxième exemple d'exécution, le deuxième interrupteur électronique 20 consiste en un thyristor 25 dont l'entrée de commande formant gâchette est reliée à la sortie du deuxième étage diviseur de tension. Ce deuxième interrupteur électronique 25 raccorde la sortie du premier interrupteur électronique 14 au conducteur 5, et dans le circuit 2 ne sont pas prévus le transistor PUT 20, le conducteur de liaison 27 et le redresseur 21. Dans ce cas, un redresseur 26 relie la sortie du premier étage diviseur de tension aussi bien au redresseur 12 qu'à l'enroulement 13 du relais formant le déclencheur 8.

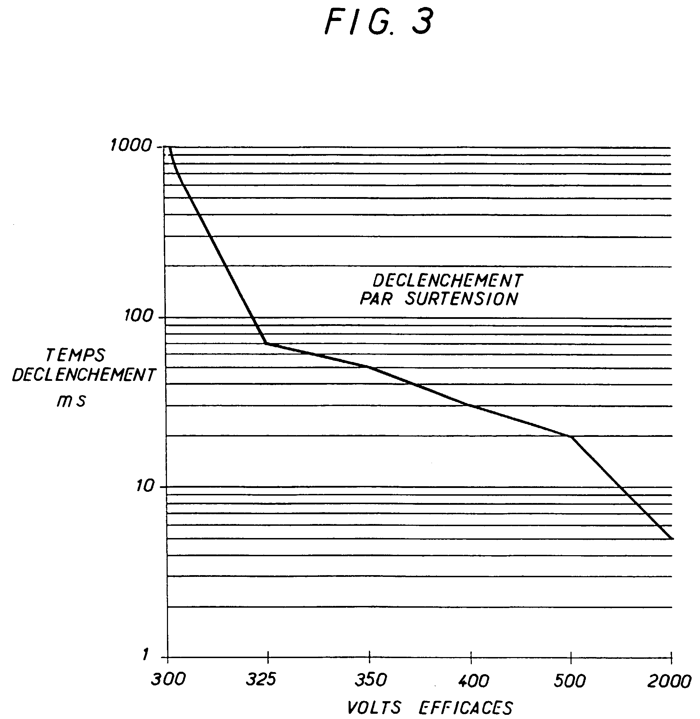

Dans les deux exemples d'exécution, il se crée par la présence de l'organe de temporisation 17 une temporisation du déclenchement, celle-ci étant plus brève en cas de surtension assez élevée, et plus longue en cas de surtension plus faible. La temporisation de déclenchement en fonction de la surtension est représentée à titre d'exemple sur la figure 3, pour différentes valeurs de surtensions. Les valeurs de temporisation peuvent toutefois être sélectionnées dans une large mesure en variant la capacité du condensateur formant l'organe de temporisation 17 et les valeurs ohmiques des résistances 18, 19.

Des pointes de tension transitoires de faible puissance efficace ne sont en général pas suffisantes pour que la tension de déclenchement, apparaissant aux bornes du condensateur formant l'organe de temporisation 17 pour le premier interrupteur électronique 14, s'élève suffisamment pour que ce dernier soit activé en état conducteur et qu'il actionne le déclencheur 8.

Les redresseurs 12, 21 et 26 peuvent consister en de simples diodes assurant un redressement demi-ondes, ou en variante en un redresseur pleine onde ou encore en un état doubleur de tension.

Conformément à l'invention, divers composants de commande électriques réglables sont également utilisables pour le deuxième interrupteur électronique 20 ou respectivement 25.

Mais, dans tous les cas, ce deuxième interrupteur électronique 20, 25 a préférentiellement un seuil de commutation supérieur à celui du premier interrupteur électronique 14, pour éviter toute interaction entre les deux modes de déclenchement.

Par exemple, le seuil de commutation du deuxième interrupteur électronique 20, 25 est de l'ordre de 10 V et celui du premier interrupteur électronique 14 est de l'ordre de 3 V.

Ainsi, les caractéristiques du mode de déclenchement différentiel ne sont pas modifiées.

Autrement dit, du fait du circuit 2, le comportement de l'interrupteur différentiel sélectif à courant propre 1 n'est normalement pas influencé en cas de tension nominale avec de faibles surtensions ; toutefois le cadre de l'invention englobe le raccourcissement de la temporisation de déclenchement fonction d'un courant de défaut, en cas d'une surtension supérieure au seuil de déclenchement du deuxième interrupteur 20 et inférieure au seuil de déclenchement du premier interrupteur 14.

## Revendications

1. Interrupteur différentiel du genre comportant un transformateur de courant totalisateur et un circuit de déclenchement, et dans lequel, d'une part, un premier interrupteur électronique, actionné par le courant de défaut apparaissant dans le transformateur de courant totalisateur, commande, lors de sa commutation, un déclencheur (8) qui coupe au moins une phase du réseau, et, d'autre part, un circuit (2) de saisie d'une surtension est raccordé au circuit de déclenchement (7) de telle façon que ce circuit (2) actionne en cas d'apparition d'une surtension le premier interrupteur électronique (14), et, par conséquent, le déclencheur (8), caractérisé en ce que, un organe de temporisation (17) engendrant une temporisation de déclenchement étant prévu, et s'agissant ainsi d'un interrupteur sélectif, qui est à courant propre, le circuit de saisie d'une surtension (2) est branché à la sortie en parallèle sur ledit organe de temporisation (17) pour fournir l'énergie d'alimentation nécessaire au déclencheur (8), et en ce que cet organe de temporisation (17) est un accumulateur d'énergie.

2. Interrupteur différentiel selon la revendication 1, caractérisé par le fait que le circuit de saisie d'une surtension (2) comporte un montage (18,19, 22,23) pour le réglage du seuil de déclenchement de l'interrupteur électronique (14).

3. Interrupteur différentiel selon l'une quelconque des revendications 1, 2, caractérisé par le fait qu'il est prévu un deuxième interrupteur électronique (20, 25) servant à la commande du premier interrupteur électronique (14) en fonction de la surtension.

4. Interrupteur différentiel selon la revendication 3, caractérisé par le fait que le deuxième interrupteur électronique est un transistor programmable Unijunction (20).

5. Interrupteur différentiel selon la revendication 3, caractérisé par le fait que le deuxième interrupteur électronique est un thyristor (25).

6. Interrupteur différentiel selon les revendications 2 et 3, prises conjointement, caractérisé par le fait que le montage (18,19, 22,23) est un circuit de résistance à deux étages diviseurs de tension, dont le premier étage (18, 19) délivre en cas de surtension l'énergie électrique pour la commande du premier et du deuxième interrupteur électronique (14, 20, 25) et celle du déclencheur (8), et dont le deuxième étage (22, 23) engendre essentiellement la tension appliquée à l'entrée de commande du deuxième interrupteur électronique (20, 25).

7. Interrupteur différentiel selon les revendications 2 et 3, prises conjointement, caractérisé en ce que le deuxième interrupteur électronique (20, 25) a un seuil de commutation supérieur à celui du premier interrupteur électronique (14).

## Patentansprüche

1. Fehlerstromschutzschalter mit einem Summenstromwandler und einer Auslöseschaltung, bei welchem einerseits ein erster elektronischer, von einem im Summenstromwandler auftretenden Fehlerstrom betätigter Schalter im Falle seines Ansprechens einen Auslöser (8) ansteuert, der mindestens eine Netzphase unterbricht, und andererseits ein auf eine Überspannung ansprechender Schaltkreis (2) derart der Auslöseschaltung zugeordnet ist, daß der Schaltkreis (2) im Falle des Auftretens einer Überspannung den ersten elektronischen Schalter (14) und, infolgedessen, den Auslöser (8) betätigt, dadurch gekennzeichnet, daß ein eine Auslösezeitverzögerung erzeugendes Verzögerungszeitorgan (17) vorgesehen ist, und daß, auf diese Weise als selektiver mit Eigenstrom arbeitender Schutzschalter wirksam, der auf eine Überspannung ansprechende Schaltkreis (2) am Ausgang parallel zum Verzögerungszeitorgan (17) geschaltet ist, um dem Auslöser (8) die notwendige Versorgungsenergie zuzuführen, wobei das Verzögerungszeitorgan (17) einen Energiespeicher bildet.

2. Fehlerstromschutzschalter nach Anspruch 1, dadurch gekennzeichnet, daß der auf eine Uberspannung ansprechende Schaltkreis (2) eine Schaltung (18,19,22,23) für die Einstellung der Auslöseschwelle des elektronischen Schalters (14) umfaßt.

3. Fehlerstromschutzschalter nach einem der Ansprüche 1 oder 2, dadurch gekennzeichnet, daß ein zweiter elektronischer Schalter (20,25) vorgesehen ist, der funktionsabhängig von der Überspannung der Ansteuerung des ersten elektronischen Schalters (14) dient.

4. Fehlerstromschutzschalter nach Anspruch 3, dadurch gekennzeichnet, daß der zweite elektronische Schalter ein programmierbarer Unijunktion-Transistor (20) ist.

5. Fehlerstromschutzschalter nach Anspruch 3, dadurch gekennzeichnet, daß der zweite elektronische Schalter ein Thyristor (25) ist.

6. Fehlerstromschutzschalter nach den zusammengefaßten Ansprüchen 2 und 3, dadurch gekennzeichnet, daß die Schaltung (18,19,22,23) eine aus zwei Spannungsteilern bestehende Widerstandsschaltung ist, wobei der erste Spannungsteiler (18,19) im Falle einer Überspannung die elektrische Energie für die Ansteuerung des ersten und des zweiten elektronischen Schalters (14,20,25) und des Auslösers (8) liefert und der zweite Spannungsteiler (22,23) im wesentlichen die dem Steuereingang des zweiten elektronischen Schalters (20,25) zugeführte Spannung erzeugt.

7. Fehlerstromschutzschalter nach den zusammengefaßten Ansprüchen 2 und 3, dadurch gekennzeichnet, daß der zweite elektronische Schalter (20,25) eine höhere Umschaltschwelle als der erste elektronische Schalter (14) aufweist.

## Claims

1. A differential protective switch of the kind comprising a summing current transformer and a tripping circuit and in which on the one hand a first electronic switch actuated by thefault current appearing in the summing current transformer controls upon switching thereof a trip device (8) which cuts at least one phase of the network and on the other hand a circuit (2) for detecting an overvoltage is connected to the tripping circuit (7) in such a way that in the event of an overvoltage occurring the circuit (2) actuates the first electronic switch (14) and consequently the trip device (8), characterised in that, a time delay member (17) for producing a tripping time delay being provided,and thus being a selective switch which involves an inherent current, the circuit (2) for detecting an overvoltage is connected at the output in parallel to said time delay member (17) to deliver the supply power necessary to the trip device (8), and that said time delay member (17) is a power accumulator.

2. A differential protective switch according to claim 1 characterised in that the circuit (2) for detecting an overvoltage comprises an assembly (18, 19, 22, 23) for regulating the tripping threshold of the electronic switch (14).

3. A differential protective switch according to either one of claims 1 and 2 characterised in that there is provided a second electronic switch (20, 25) serving to control the first electronic switch (14) in dependence on the overvoltage.

4. A differential protective switch according to claim 3 characterised in that the second electronic switch is a programmable unijunction transistor (20).

5. A differential protective switch according to claim 3 characterised in that the second electronic switch is a thyristor (25).

6. A differential protective switch according to claims 2 and 3 in combination characterised in that the assembly (18, 19, 22, 23) is a resistance circuit having two voltage divider stages of which the first stage (18, 19) in the overvoltage situation delivers the electrical power for controlling the first and the second electronic switches (14, 20, 25) and for controlling the trip device (8) and the second stage (22, 23) essentially produces the voltage applied to the control input of the second electronic switch (20, 25).

7. A differential protective switch according to claims 2 and 3 in combination characterised in that the second electronic switch (20, 25) has a switching threshold higher than that of the first electronic switch (14).
